(19) Europäisches Patentamt
European Patent Office
Office européen des brevets

(11) **EP 4 481 399 A1**

(12) **EUROPEAN PATENT APPLICATION**
published in accordance with Art. 153(4) EPC

(43) Date of publication:
**25.12.2024 Bulletin 2024/52**

(51) International Patent Classification (IPC):
***G01N 35/10*** (2006.01)

(21) Application number: **22926341.3**

(52) Cooperative Patent Classification (CPC):
**G01N 35/10**

(22) Date of filing: **21.12.2022**

(86) International application number:
**PCT/JP2022/047243**

(87) International publication number:
**WO 2023/157464 (24.08.2023 Gazette 2023/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.02.2022 JP 2022021935**

(71) Applicant: **HITACHI HIGH-TECH CORPORATION Tokyo 105-6409 (JP)**

(72) Inventors:
• **MATSUDA, Kyohei**
  **Tokyo 105-6409 (JP)**
• **HIRANO, Masaaki**
  **Tokyo 100-8280 (JP)**
• **TAKADA, Eiichiro**
  **Tokyo 105-6409 (JP)**
• **FUKUYAMA, Yuto**
  **Tokyo 105-6409 (JP)**
• **YABUTANI, Chie**
  **Tokyo 105-6409 (JP)**
• **SHIMADA, Masafumi**
  **Tokyo 105-6409 (JP)**

(74) Representative: **Strehl Schübel-Hopf & Partner Maximilianstrasse 54 80538 München (DE)**

(54) **AUTOMATED ANALYZING DEVICE, AND CONTROL METHOD FOR SAME**

(57) Provided is an automatic analyzer and a control method thereof that are capable of preventing liquid leakage when a dispensing probe that aspirated air and a liquid in order rises. The automatic analyzer for analyzing a sample includes: a dispensing unit configured to dispense the sample and/or a reagent; and a control unit configured to control the dispensing unit. When a dispensing probe provided in the dispensing unit rises after aspirating air and a liquid in order, the control unit aspirates an amount of outside air corresponding to a length of expansion of the air through a tip of the dispensing probe.

[FIG. 1]

**Description**

Technical Field

The present invention relates to an automatic analyzer and a control method thereof.

Background Art

An automatic analyzer for analyzing a specific component included in a sample such as blood and urine provided by a patient includes a dispensing unit that dispenses the sample or a reagent by aspirating them from a sample container or a reagent container and discharging them into a reaction container. In regard to the dispensing unit, Patent Literature 1 discloses detecting an abnormality of aspirating the sample or air based on a detection signal output by a sensor that detects presence of liquid in a predetermined location in the dispensing unit when the sample or air is aspirated.

Citation List

Patent Literature

Patent Literature 1: Japanese Unexamined Patent Application Publication No. 2015-10894

Summary of Invention

Technical Problem

However, Patent Literature 1 does not take into consideration liquid leakage when a dispensing probe having sequentially aspirated the air and the liquid rises. The automatic analyzer is intended to speed up an operation of each unit, for example, vertical movement of the dispensing probe, to reduce time required for an analysis. However, speed-up of the vertical movement may cause the liquid leakage from the dispensing probe having sequentially aspirated the air and the liquid, thereby lowering dispensing accuracy and analytical accuracy.

Therefore, it is an object of the present invention to provide an automatic analyzer capable of suppressing liquid leakage when a dispensing probe having sequentially aspirated air and liquid rises, and a control method thereof.

Solution to Problem

To achieve the aforementioned object, the present invention provides an automatic analyzer for analyzing a sample, the automatic analyzer including: a dispensing unit that dispenses the sample and/or reagent; and a control unit that controls the dispensing unit, in which the control unit causes an amount of external air corresponding to a length by which the air expands to be aspirated through a tip of a dispensing probe when the dispensing probe provided in the dispensing unit rises after sequentially aspirating the air and liquid.

In addition, the present invention provides a control method of an automatic analyzer for analyzing a sample, the method including: causing an amount of external air corresponding to a length by which the air expands to be aspirated through a tip of a dispensing probe when the dispensing probe provided in the dispensing unit that dispenses the sample or the reagent rises after sequentially aspirating the air and liquid.

Advantageous Effects of Invention

According to the present invention, it is possible to provide an automatic analyzer capable of suppressing liquid leakage when a dispensing probe having sequentially aspirated air and liquid rises, and a control method thereof.

Brief Description of Drawings

[FIG. 1] FIG. 1 is a schematic diagram showing an example of an overall configuration of an automatic analyzer.
[FIG. 2] FIG. 2 is a schematic diagram showing a configuration example of a dispensing unit.
[FIG. 3] FIG. 3 is a diagram showing an example of operations of the dispensing unit.
[FIG. 4] FIG. 4 is a diagram showing an expansion amount of air when a dispensing probe rises.
[FIG. 5] FIG. 5 is a diagram showing an example of a rising velocity and acceleration of the dispensing probe.

[FIG. 6] FIG. 6 is a diagram showing an example of operations of the dispensing unit when aspirating two kinds of liquids.

[FIG. 7] FIG. 7 is a diagram showing an expansion amount of air when a dispensing probe that aspirated the two kinds of liquids rises.

Description of Embodiments

In the following, preferred embodiments of an automatic analyzer according to the present invention will be described with reference to accompanying drawings. It should be noted that, in the following description and the accompanying drawings, components having an identical functional configuration will not be described again by denoting those components with an identical reference numerals.

First Embodiment

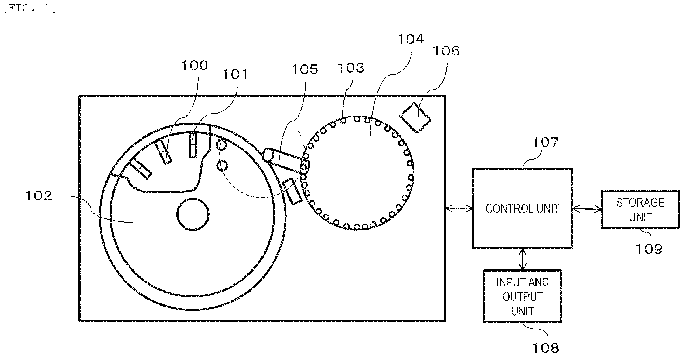

An example of an overall configuration of an automatic analyzer is described using Fig. 1. The automatic analyzer is a device that analyzes a specific component included in a sample such as blood and urine provided by a patient, and has a disk 102, a dispensing unit 105, an incubator (reaction disk) 104, a measurement unit 106, a control unit 107, an input and output unit 108, and a storage unit 109. Each unit will be described below.

The disk 102 stores therein a sample container 100 that contains the sample and a reagent bottle 101 that contains a reagent, and carries the sample container 100 and the reagent bottle 101 to a location accessible by the dispensing unit 105.

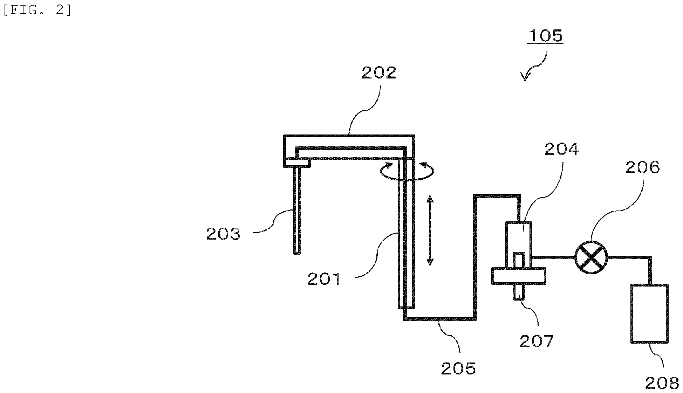

The dispensing unit 105 dispenses the sample or the reagent from the sample container 100 or the reagent bottle 101 to a reaction cell 103 stored in the incubator 104. It should be noted that the sample and the reagent may be dispensed by a single dispensing unit 105 or the sample and the reagent may be dispensed separately by each of a plurality of dispensing units 105. More detailed configuration of the dispensing unit 105 will be described later using Fig. 2.

The incubator 104 stores therein the reaction cell 103 containing a liquid mixture of the sample and the reagent within a temperature range for reacting the liquid mixture, and carries the reaction cell 103 to a location accessible by the dispensing unit 105 and measurement unit 106. The liquid mixture in the reaction cell 103 is turned into a reaction liquid to be used for measurement by storing the reaction cell 103 within a predetermined temperature range.

The measurement unit 106 emits light to the reaction cell 103, measures the light from the reaction cell 103, and transmits a measurement signal to the control unit 107.

The control unit 107 is a computer that analyzes a specific component included in the sample based on the measurement signal transmitted from the measurement unit 106 and controls an operation of each unit.

The input and output unit 108 is a device that receives an input of data required for an analysis and displays a result of the analysis, such as a keyboard, a mouse, a touch panel, a liquid crystal display, and the like.

The storage unit 109 is a device that stores therein the data required for the analysis and the result of the analysis, such as an HDD (Hard Disk Drive), an SSD (Solid State Drive), and the like.

An example configuration of the dispensing unit 105 is described using Fig. 2. The dispensing unit 105 includes a shaft 201, an arm 202, a dispensing probe 203, a syringe pump 204, a tube 205 and an electromagnetic valve 206.

The shaft 201 is a hollow member extending in a vertical direction, which is vertically moved. The arm 202 is a hollow member extending in a horizontal direction, to which an upper end of the shaft 201 is attached at one end and the dispensing probe 203 is attached at the other end, and which is rotated around the shaft 201 serving as an axis of rotation. The rotation of the arm 202 moves the dispensing probe 203 to a position right above the sample container 100 or the reagent bottle 101.

The dispensing probe 203 is a small tubing to be inserted into the sample container 100 or the reagent bottle 101 by the vertical movement of the shaft 201, and its upper end is connected to the tube 205. The tube 205 connects the dispensing probe 203 and the syringe pump 204 through the arm 202 and the shaft 201.

The syringe pump 204 applies pressure to system water in the dispensing probe 203 by driving a plunger 207 to aspirate or discharge the sample or the reagent from a lower end of the dispensing probe 203. That is, the sample or the like is dispensed by the aspiration resulting from a negative pressure of the system water and by the discharge resulting from a positive pressure of the system water.

The electromagnetic valve 206 is disposed between a system water container 208 containing the system water and the syringe pump 204, and is closed while the sample or the like is being dispensed. When the dispensation is terminated, the electromagnetic valve 206 is opened, an inner wall of the dispensing probe 203 is washed by the system water supplied from the system water container 208, and the inside of the tube 205 is filled with the system water. That is, the tube 205 before dispensation is filled with the system water.

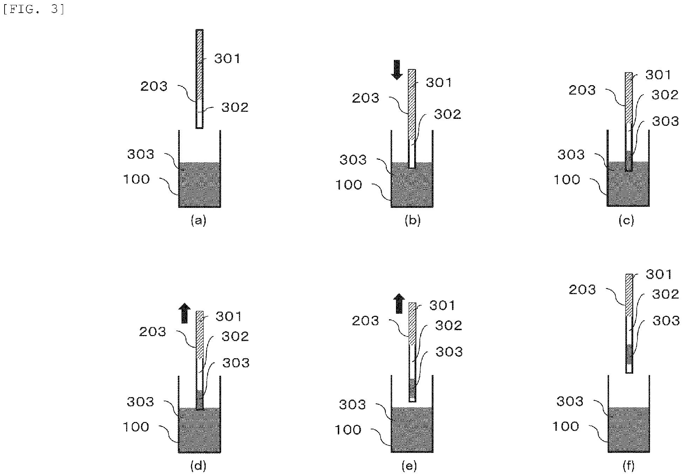

A case of aspirating the sample is described using Fig. 3 as an example of an operation of the dispensing unit 105 controlled by the control unit 107. It should be noted that the liquid to be aspirated is not limited to the sample, but may be the reagent.
(a) The dispensing probe 203 is moved to the position right above the sample container 100 containing a sample 303 by the rotation of the arm 202. It should be noted that there is air 302 at a tip of the dispensing probe 203 for separating system water 301 and the sample 303.

(b) The dispensing probe 203 is inserted into the sample container 100 by descent of the shaft 201. It should be noted that the descent of the shaft 201 and the dispensing probe 203 is stopped when the lower end of the dispensing probe 203 comes below a liquid level of the sample 303. Whether the lower end of the dispensing probe 203 is below the liquid level of the sample 303 or not is determined on the basis of an output signal of a liquid level sensor not shown in the figure.

(c) The negative pressure is applied to the system water 301 by the syringe pump 204, and the sample 303 is aspirated from the lower end of the dispensing probe 203. It should be noted that, because the liquid level is lowered by the aspiration of the sample 303, the height of the dispensing probe 203 during the aspiration is adjusted so that the lower end is not exposed to the air.

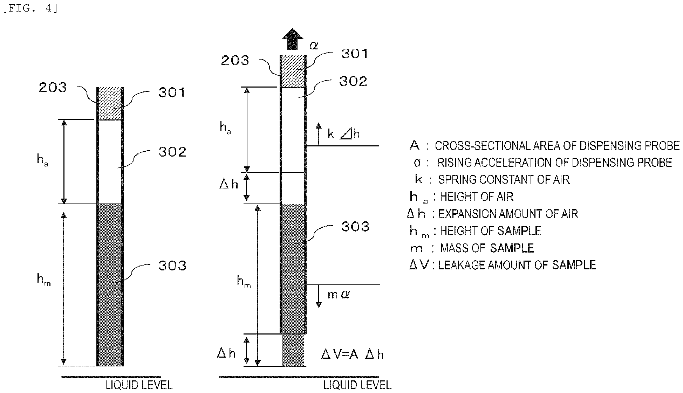

(d) The dispensing probe 203 having aspirated a predetermined amount of the sample 303 starts to rise. When the dispensing probe 203 rises acceleratingly, because a downward inertia force acts on the aspirated sample 303, the air 302 may be expanded and a part of the aspirated sample 303 may be pushed out of the dispensing probe 203, resulting in a liquid leakage. Therefore, in the first embodiment, an aspiration for suppressing the liquid leakage starts as soon as the dispensing probe 203 starts to rise. An aspiration amount is controlled according to an expansion amount of the air 302. The expansion amounts of the air 302 will be described later using Fig. 4.

(e) The dispensing probe 203 continues to rise acceleratingly, and its lower end gets out of the liquid level. Because the inertia force continues to act on the aspirated sample 303 while the dispensing probe 203 rises acceleratingly, the aspiration for suppressing the liquid leakage is continued even after the lower end of the dispensing probe 203 gets out of the liquid level. It should be noted that the air is aspirated after the lower end of the dispensing probe 203 gets out of the liquid level.

(f) After the rising speed reaches its maximum speed, the dispensing probe 203 decreases the rising speed and stops at an upper limit point that is the height when the dispensing probe 203 is in a stand-by state. It should be noted that, because the air 302 does not expand during a period in which the rising speed is constant and the air 302 shrinks during a period in which the rising speed is decreased, no liquid leakage occurs during both periods. The period in which the rising speed is constant includes a period of the maximum speed and a stop period. That is, the air 302 does not expand or shrink with the dispensing probe 203 stopping at the upper limit point.

An expansion amount $\Delta h$ of the air 302 is described using Fig. 4. When the dispensing probe 203 containing the system water 301, the air 302, and the sample 303 rises at an acceleration $\alpha$, the downward inertia force is applied to the sample 303 to expand the air 302. Assuming the air 302 as an air spring with a spring constant k, a force $k\Delta h$ generated by the expansion amount $\Delta h$ is balanced with an inertia force $m\alpha$ acting on the sample 303 with a mass m, whereby the following formula is established.

$$k\Delta h - m\alpha = 0 \quad \text{(formula 1)}$$

It should be noted that the spring constant k of the air spring can be represented by the following formula based on the Boyle-Charles Law and the Hooke's Law.

$$k = \gamma(A^2 p)/V_a \quad \text{(formula 2)}$$

Here, $\gamma$ is a polytropic index of the air 302, A is a cross-sectional area of the dispensing probe 203, P is a pressure of the air 302, and $V_a$ is a volume of the air 302. It should be noted that $\gamma=1.4$ holds true assuming a series of operations in the dispensing probe 203 as an adiabatic cycle. In addition, since the lower end of the dispensing probe 203 before being inserted into the sample container 100 is open to the atmosphere, the pressure P is an atmospheric pressure.

Moreover, the mass m of the sample 303 can be represented by the following formula using a density $\rho$ and a volume $V_m$ of the sample 303.

$$m = \rho V_m \quad \text{(formula 3)}$$

Furthermore, a height hm of the sample 303 and a height ha of the air 302 can be represented by the following formula using the volume $V_m$ of the sample 303 or the volume $V_a$ of the air 302 and a cross-sectional area A of the dispensing probe 203.

$$h_a = V_m/A \quad \ldots \quad (formula\ 4)$$

$$h_a = V_a/A \quad \ldots \quad (formula\ 5)$$

Solving (Formula 1) for $\Delta h$ from (Formula 2) using (Formula 5), the following formula is obtained.

$$\Delta h = h_a h_m \rho \alpha / (\gamma P) \quad \ldots \quad (formula\ 6)$$

Moreover, a leakage rate $\Delta V$ of the sample 303 pushed out of the dispensing probe 203 by expansion of the air 302 is proportional to the acceleration $\alpha$ as indicated by the following formula.

$$\Delta V = A\Delta h + C = V_a V_m \rho \alpha / (\gamma PA) + C \ldots \quad (formula\ 7)$$

Here, C is a noise component including a viscous friction between the inner wall of the dispensing probe 203 and the sample 303, a vibration of the dispensing probe 203, and the like, which is preset according to a kind and an amount of the sample 303. It should be noted that C is a value sufficiently smaller than $V_a V_m \rho \alpha / (\gamma PA)$.

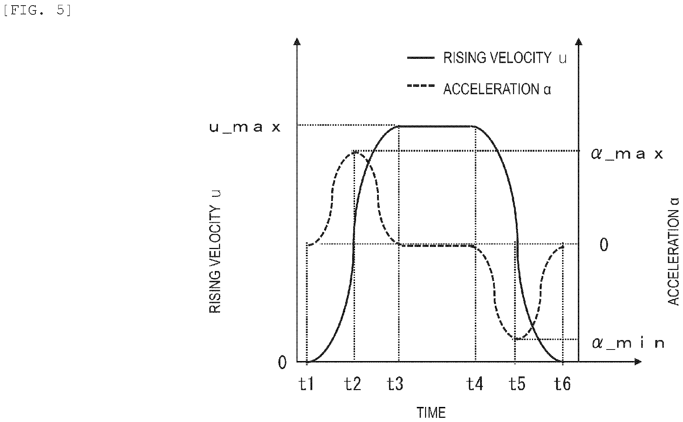

An example of a rising speed u and the acceleration $\alpha$ of the dispensing probe 203 is described using Fig. 5. In Fig. 5, a solid line indicates the rising speed u that continuously changes via maximum speed u_max since the dispensing probe 203 having aspirated the predetermined amount of the sample 303 starts to rise at a time t1 until it stops at the upper limit point at a time t6. Moreover, a dotted line indicates the acceleration $\alpha$ that continuously changes through an acceleration period between the time t1 and a time t3, a constant speed period between the time t3 and a time t4, and a deceleration period between the time t4 and the time t6. It should be noted that the acceleration $\alpha$ becomes its maximum value $\alpha$_max at a time t2 and becomes its minimum value $\alpha$_min at a time t5. It should also be noted that the maximum value a_max and the minimum value $\alpha$_min of the acceleration $\alpha$ is specified by the maximum speed u_max of the dispensing probe 203 and the time (t6-t1) required for its rising.

Because the leakage rate $\Delta V$ of the sample 303 is proportional to the acceleration $\alpha$ as indicated by (Formula 7), in a case where the rising speed u and the acceleration $\alpha$ of the dispensing probe 203 change as shown in Fig. 5, the leakage rate $\Delta V$ reaches its maximum at the time t2. That is, it is possible to suppress the liquid leakage by aspirating from the dispensing probe 203 an amount of the external air corresponding to the leakage rate $\Delta V$ calculated by substituting $\alpha = \alpha$_max into (Formula 7).

In addition, because the liquid leakage occurs during the acceleration period between the time t1 and the time t3, the aspiration of the external air from the dispensing probe 203 may be limited to be within the acceleration period between the time t1 and the time t3. It is possible to make a range smaller in which the inner wall of the dispensing probe 203 contacts the aspirated sample 303 by limiting the aspiration of the external air within the acceleration period.

Second Embodiment

In the first embodiment, the description is given of a case of the dispensing probe 203 aspirating one kind of liquid, namely aspirating the sample 303 only. The liquid aspirated by the dispensing probe 203 is not limited to one kind but there may be a plurality of kinds. In a second embodiment, the description is given of a case in which the dispensing probe 203 aspirates two kinds of liquids. It should be noted that the difference from the first embodiment is that two kinds of liquids are aspirated by the dispensing probe 203 instead of one kind, and therefore description of other features is omitted.

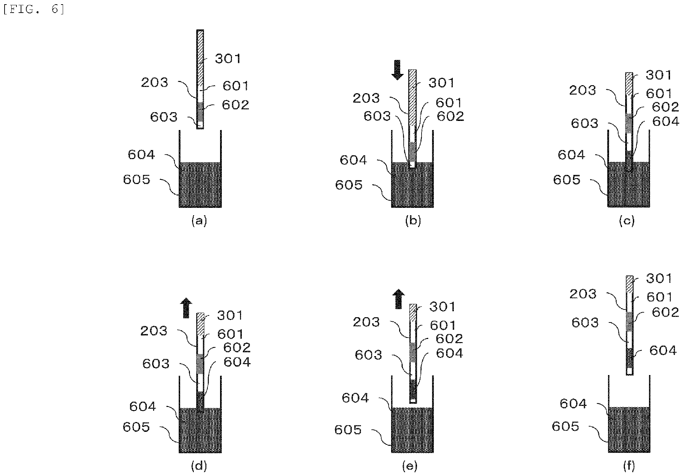

A case of aspirating a second liquid 604 after aspirating a first liquid 602 is described using Fig 6 as an example of an operation of the dispensing unit 105 controlled by the control unit 107.

(a) The dispensing probe 203 is moved by the rotation of the arm 202 to a position right above a container 605 that contains the second liquid 604. It should be noted that first air 601 and the first liquid 602 have been aspirated into the dispensing probe 203. In addition, there is second air 603 at the tip of the dispensing probe 203 for separating the first liquid 602 and the second liquid 604.

(b) The dispensing probe 203 is inserted into the container 605 by the descent of the shaft 201. It should be noted that the descent of the shaft 201 and the dispensing probe 203 is stopped when the lower end of the dispensing probe 203 comes below the liquid level of the second liquid 604. Whether the lower end of the dispensing probe 203 is below the liquid level of the second liquid 604 or not is determined on the basis of the output signal of the liquid level sensor, as in the first embodiment.

(c) The negative pressure is applied to the system water 301 by the syringe pump 204, and second liquid 604 is aspirated from the lower end of the dispensing probe 203. The height of the dispensing probe 203 during the aspiration is adjusted so that the lower end is not exposed to the air.

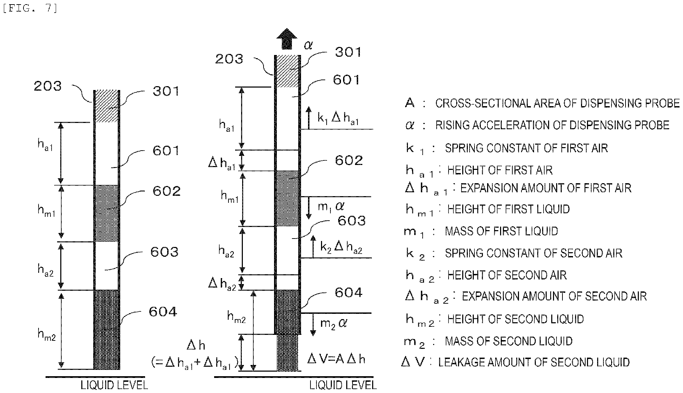

(d) The dispensing probe 203 having aspirated a predetermined amount of the second liquid 604 starts to rise. When the dispensing probe 203 rises acceleratingly, because a downward inertia force acts on the first liquid 602 and the second liquid 604, the first air 601 and the second air 603 may be expanded and a part of the aspirated second liquid 604 may be pushed out of the dispensing probe 203, resulting in a liquid leakage. Therefore, in the second embodiment, also, an aspiration for suppressing the liquid leakage starts as soon as the dispensing probe 203 starts to rise. The aspiration amount is controlled according to the expansion amounts of the first air 601 and the second air 603. The expansion amounts of the first air 601 and the second air 603 will be described later using Fig. 7.

(e) The dispensing probe 203 continues to rise acceleratingly, and its lower end gets out of the liquid level. Because the inertia force continues to act on the first liquid 602 and the second liquid 604 while the dispensing probe 203 rises acceleratingly, the aspiration for suppressing the liquid leakage is continued even after the lower end of the dispensing probe 203 gets out of the liquid level. It should be noted that the air is aspirated after the lower end of the dispensing probe 203 gets out of the liquid level.

(f) After the rising speed reaches its maximum speed, the dispensing probe 203 decreases the rising speed and stops at an upper limit point that is the height when the dispensing probe 203 is in a stand-by state. It should be noted that no liquid leakage occurs during the constant speed period and the deceleration period for the rising speed, as in the first embodiment.

An expansion amount $\Delta h_{a1}$ of the first air 601 and an expansion amount $\Delta h_{a2}$ of the second air 603 will be described using Fig. 7. When the dispensing probe 203 containing the first air 601, the first liquid 602, the second air 603, and the second liquid 604 rises at the acceleration $\alpha$, the downward inertia force acts on the first liquid 602 and the second liquid 604 to expand the first air 601 and the second air 603. Assuming the first air 601 as an air spring with a spring constant $k_i$, a force $k_1\Delta h_{a1}$ generated by the expansion amount $\Delta h_{a1}$ of the first air 601 is balanced with an inertia force $(m_1+m_2)\alpha$ acting on the first liquid 602 with a mass $m_1$ and the second liquid 604 with a mass $m_2$, whereby the following formula is established.

$$k_1\Delta h_{a1} - (m_1+m_2)\ \alpha\ -\ 0\ \ldots\ \ (\text{formula 8})$$

In addition, assuming the second air 603 as an air spring with a spring constant $k_i$, a force $k_2\Delta h_{a2}$ generated by the expansion amount $\Delta h_{a2}$ of the second air 603 is balanced with an inertia force $m_2\alpha$ acting on the second liquid 604, whereby the following formula is established.

$$k_2\gamma h_{a2} - m_2\alpha\ =\ 0\ \ldots\ \ (\text{formula 9})$$

It should be noted that the spring constants $k_1$ and $k_2$ of the air springs is calculated using (Formula 2).

An expansion amount $\Delta h$ pushing out the second liquid 604 is equal to a sum of $\Delta h_{a1}$ and $\Delta h_{a2}$ respectively calculated from (Formula 8) and (Formula 9), which is represented in the following formula.

$$\Delta h\ =\ \Delta h_{a1}\ +\ \Delta h_{a2}\ \ldots\ \ (\text{formula 10})$$

Furthermore, the leakage rate $\Delta V$ of the second liquid 604 pushed out of the dispensing probe 203 by expansion of the first air 601 and the second air 603 is represented in the following formula using (Formula 5) from (Formula 10) or (Formula 8) from (Formula 5).

$$\Delta V\ =\ A\Delta h\ +\ C\ =\ \{V_{a1}\ (V_{m1}+V_{m2})+V_{a2}V_{m2}\}\rho\alpha/(\gamma PA)+C\ \ldots\ \ (\text{formula 11})$$

As indicated in (Formula 11), when aspirating two kinds of liquid, the leakage rate $\Delta V$ is also proportional to the acceleration $\alpha$ when the dispensing probe 203 rises. That is, even when aspirating a plurality of kinds of liquids, it is possible to suppress the liquid leakage by aspirating from the dispensing probe 203 an amount of the external air corresponding to the leakage rate $\Delta V$ calculated by substituting the maximum value of the acceleration $\alpha$ into (Formula 11). It is also possible to make the range smaller in which the aspirated liquid contacts the inner wall of the dispensing probe 203 by limiting the aspiration of the external air within the acceleration period.

It should be noted that the following formula is obtained by extending (Formula 11) to the leakage rate $\Delta V$ when aspirating n kinds of liquids.

$$\Delta V = \{V_{a1}(V_{m1}+V_{m2}+...+V_{mn}) + ...+V_{an}V_{mn}\} \ \rho\alpha/(\gamma PA) + C ...$$

$$(\text{formula } 12)$$

It can be seen from (Formula 11) and (Formula 12) that the volume of the first air 601 has a significant effect when aspirating a plurality of kinds of liquids using a single dispensing probe 203.

A plurality of embodiments of the present invention have been described above. The present invention is not limited to the above embodiments, but alterations may be made to components thereof without departing from the scope of the invention. Moreover, a plurality of components disclosed in the above embodiments may be combined as appropriate. Furthermore, some of the components may be removed from all the components described in the above embodiments.

List of Reference Signs

| | |
|---|---|
| 100: | sample container |
| 101: | reagent bottle |
| 102: | disk |
| 103: | reaction cell |
| 104: | incubator |
| 105: | dispensing unit |
| 106: | measurement unit |
| 107: | control unit |
| 108: | input and output unit |
| 109: | storage unit |
| 201: | shaft |
| 202: | arm |
| 203: | dispensing probe |
| 204: | syringe pump |
| 205: | tube |
| 206: | electromagnetic valve |
| 207: | plunger |
| 208: | system water container |
| 301: | system water |
| 302: | air |
| 303: | sample |
| 601: | first air |
| 602: | first liquid |
| 603: | second air |
| 604: | second liquid |
| 605: | container |

**Claims**

1. An automatic analyzer for analyzing a sample, the automatic analyzer comprising:

   a dispensing unit configured to dispense the sample and/or a reagent; and
   a control unit configured to control the dispensing unit, wherein
   when a dispensing probe provided in the dispensing unit rises after aspirating air and a liquid in order, the control unit aspiration an amount of outside air corresponding to a length of expansion of the air through a tip of the dispensing probe.

2. The automatic analyzer according to claim 1, wherein
   the control unit calculates the amount corresponding to the length of expansion of the air based on an acceleration when the dispensing probe rises.

3. The automatic analyzer according to claim 2, wherein the control unit calculates an amount $\Delta V$ corresponding to the length of expansion of the air as $\Delta V = V_a V_m \rho\alpha/(\gamma PA) + C$ using an acceleration $\alpha$ when the dispensing probe rises, a

volume $V_a$ of the air, a volume $V_m$ of the liquid, a density $\rho$ of the liquid, and a polytropic index $\gamma$ of the air, a pressure P of the air, a cross-sectional area A of the dispensing probe, and a noise component C.

4. The automatic analyzer according to claim 1, wherein
   The control unit aspirates the outside air during an acceleration period when the dispensing probe rises.

5. The automatic analyzer according to claim 1, wherein
   when the dispensing probe rises after aspirating a first air and a first liquid in order and then aspirating a second air and a second liquid in order, the control unit aspirates an amount of outside air corresponding to a sum of a length of expansion of the first air and a length of expansion of the second air through a tip of the dispensing probe.

6. The automatic analyzer according to claim 5, wherein
   the control unit calculates an amount $\Delta V$ corresponding to the sum of the length of expansion of the first air and the length of expansion of the second air as $\Delta V = \{V_{a1}(V_{m1} + Vm_2) + V_{a2}Vm_2\}\, p\alpha/(\gamma PA) + C$ using an acceleration $\alpha$ when the dispensing probe rises, a volume $V_{a1}$ of the first air, a volume $Vm_1$ of the first liquid, a volume $V_{a2}$ of the second air, a volume $Vm_2$ of the second liquid, a density $\rho$ of the first liquid and the second liquid, a polytropic index $\gamma$ of the first air and the second air, a pressure P of the first air and the second air, a cross-sectional area A of the dispensing probe, and a noise component C.

7. A control method of an automatic analyzer for analyzing a sample, the method comprising:
   aspirating, when a dispensing probe provided in a dispensing unit rises after aspirating air and a liquid in order, an amount of outside air corresponding to a length of expansion of the air through a tip of the dispensing probe, the dispensing unit being configured to dispense the sample or a reagent.

[FIG. 1]

[FIG. 2]

[FIG. 3]

[FIG. 4]

A : CROSS-SECTIONAL AREA OF DISPENSING PROBE
α : RISING ACCELERATION OF DISPENSING PROBE
k : SPRING CONSTANT OF AIR
$h_a$ : HEIGHT OF AIR
$\Delta h$ : EXPANSION AMOUNT OF AIR
$h_m$ : HEIGHT OF SAMPLE
m : MASS OF SAMPLE
$\Delta V$ : LEAKAGE AMOUNT OF SAMPLE

[FIG. 5]

[FIG. 6]

(a)   (b)   (c)

(d)   (e)   (f)

[FIG. 7]

A : CROSS-SECTIONAL AREA OF DISPENSING PROBE

$\alpha$ : RISING ACCELERATION OF DISPENSING PROBE

$k_1$ : SPRING CONSTANT OF FIRST AIR

$h_{a1}$ : HEIGHT OF FIRST AIR

$\Delta h_{a1}$ : EXPANSION AMOUNT OF FIRST AIR

$h_{m1}$ : HEIGHT OF FIRST LIQUID

$m_1$ : MASS OF FIRST LIQUID

$k_2$ : SPRING CONSTANT OF SECOND AIR

$h_{a2}$ : HEIGHT OF SECOND AIR

$\Delta h_{a2}$ : EXPANSION AMOUNT OF SECOND AIR

$h_{m2}$ : HEIGHT OF SECOND LIQUID

$m_2$ : MASS OF SECOND LIQUID

$\Delta V$ : LEAKAGE AMOUNT OF SECOND LIQUID

## INTERNATIONAL SEARCH REPORT

International application No.

**PCT/JP2022/047243**

### A. CLASSIFICATION OF SUBJECT MATTER

*G01N 35/10*(2006.01)i
FI: G01N35/10 D

According to International Patent Classification (IPC) or to both national classification and IPC

### B. FIELDS SEARCHED

Minimum documentation searched (classification system followed by classification symbols)

G01N35/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2012/057111 A1 (HITACHI HIGH-TECHNOLOGIES CORPORATION) 03 May 2012 (2012-05-03) paragraphs [0013], [0014], [0017]-[0022], [0029], fig. 1-8 | 1-4, 7 |
| Y | | 5-6 |
| Y | WO 2017/047481 A1 (IS TECHNOLOGY JAPAN INC.) 23 March 2017 (2017-03-23) paragraph [0056], fig. 15 | 5-6 |
| Y | JP 61-234335 A (ALOKA CO., LTD.) 18 October 1986 (1986-10-18) p. 2, lower right column, line 1 to p. 3, upper right column, line 1, fig. 6 | 5-6 |
| A | JP 2014-092427 A (HITACHI HIGH-TECHNOLOGIES CORP.) 19 May 2014 (2014-05-19) paragraph [0005] | 1-7 |
| A | US 2003/0049861 A1 (WOODWARD, Roger P.) 13 March 2003 (2003-03-13) entire text, all drawings | 1-7 |
| P, A | WO 2022/091545 A1 (HITACHI HIGH-TECH CORP.) 05 May 2022 (2022-05-05) paragraphs [0072]-[0079], fig. 12, 13 | 5-6 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 February 2023** | **14 March 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/047243**

| Patent document cited in search report | | | Publication date (day/month/year) | Patent family member(s) | | | Publication date (day/month/year) |
|---|---|---|---|---|---|---|---|
| WO | 2012/057111 | A1 | 03 May 2012 | US | 2013/0259745 | A1 | |
| | | | | paragraphs [0021], [0022], [0025]-[0034], [0041], fig. 1-8 | | | |
| | | | | EP | 2634586 | A1 | |
| | | | | CN | 103201634 | A | |
| WO | 2017/047481 | A1 | 23 March 2017 | US | 2018/0201893 | A1 | |
| | | | | paragraph [0079], fig. 15 | | | |
| | | | | US | 2021/0054329 | A1 | |
| | | | | EP | 3351836 | A1 | |
| | | | | CN | 107923544 | A | |
| | | | | CN | 111609168 | A | |
| JP | 61-234335 | A | 18 October 1986 | (Family: none) | | | |
| JP | 2014-092427 | A | 19 May 2014 | (Family: none) | | | |
| US | 2003/0049861 | A1 | 13 March 2003 | US | 2003/0049863 | A1 | |
| | | | | US | 2003/0202907 | A1 | |
| | | | | US | 2004/0037749 | A1 | |
| | | | | WO | 2003/022438 | A1 | |
| WO | 2022/091545 | A1 | 05 May 2022 | (Family: none) | | | |

Form PCT/ISA/210 (patent family annex) (January 2015)

**EP 4 481 399 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015010894 A